# EUROPÄISCHE PATENTSCHRIFT

(11) **EP 2 407 277 B1**
(45) Veröffentlichungstag und Bekanntmachung des Hinweises auf die Patenterteilung: **14.08.2019**
(21) Anmeldenummer: 11005640.5
(22) Anmeldetag: 11.07.2011
(51) Int. Cl.: B25F 5/00, H01R 43/042, B23D 15/14, B23D 29/00

(54) **Verfahren zur Steuerung des Öffnungslaufes von Schneidköpfen**
Method for controlling the opening sequences of cutting heads
Procédé pour commander la séquence d'ouverture de têtes de coupe

(30) Priorität: 13.07.2010 IT BZ20100027
(43) Veröffentlichungstag der Anmeldung: 18.01.2012
(73) Patentinhaber: INTERCABLE SRL, 39031 Brunico (BZ) (IT)
(72) Erfinder: Weger, Dietmar, 39030 Terento ( Bolzano) (IT)
(74) Vertreter: Oberosler, Ludwig

(56) Entgegenhaltungen:
- EP-A1- 1 244 187
- DE-A1- 4 408 499
- DE-A1-102006 026 552
- DE-A1-102008 024 018
- US-B1- 6 792 789

## Beschreibung

Die Erfindung bezieht sich auf ein Verfahren für die Betätigung von von Schneidköpfen, z.B. von der Art mit einem feststehendem und einem beweglichen Teil, wobei mindestens eines der besagten Teile mit einer Klinge oder Schneide versehen ist und das bewegliche Teil ölhydraulisch gegen das feststehende Teil bewegt wird um einen zwischengelegten Körper durchzuschneiden. Diese bekannten Geräte haben die Form kompakter Handgeräte oder bestehen aus einer Pumpengruppe welche über einem Druckschlauch mit austauschbaren Köpfen, z.B. zum Schneiden von Elektrokabel oder zum Aufpressen von Kabelschuhen oder für die Durchführung anderer Bearbeitungen welche eine Kraft benötigen die von einer Pumpengruppe erzeugt wird. Die ölhydraulische Pumpe, sei es der kompakten Handgeräte, als auch der Geräte mit Pumpengruppe, welche mit unterschiedlichen Schneid- oder Pressköpfen verbindbar ist, ist von einem Elektromotor angetrieben welcher von einem auswechselbaren Akkumulator gespeist wird.

Es ist bekannt dass die Öffnungsbewegung des beweglichen Teiles des Schneidkopfes, infolge des Erreichens des nötigen Drucks, bzw. infolge des durchgeführten Schnittes, durch Betätigung eines Rückflussventils über welches das Öl aus dem Antriebszylinder abfließen kann, erfolgt, wobei auf den bewegliche Teil des Kopfes oder auf den damit verbundene Kolben, eine Rückholfeder wirkt welche während des Arbeitslaufes (während des Schließens) geladen wird.

Aus der EP 1244187 ist ein Werkzeug für die Durchführung von Verformungen an Werkstücken, wie z.B. an Kabelschuhen, bekannt, wobei diese zwischen dem feststehenden und dem beweglichen Teil, mittels öldynamischen Kolben, mit Druck beaufschlagt werden. Um, infolge Erreichens eines bestimmten, relativ hohen Drucks, das automatische Öffnen des Werkzeuges unter Wirkung einer, während der Komprimierphase aufgeladenen, Rückholfeder zu erreichen, wird ein automatisches Rückflussventil vorgeschlagen wodurch ein möglichst schnelles Abfließen des Öls aus dem Zylinder mit Kolben in den Tank erreicht wird. Dieser relativ hohe Druck ist für die Ausführung von Arbeiten mit Druckköpfen erforderlich, im Falle von Schneidköpfen bewirkt dieser Druck eine unnütze Verschwendung von Energie und Zeit. Im Falle der Durchführung einer Folge mehrerer Arbeitsgänge, ermöglicht ein schneller Rücklauf (Öffnungsbewegung) des Werkzeugkopfes das Erreichen kürzerer Leerlaufzeiten und somit eine Erhöhung der Leistungsfähigkeit des Werkzeuges. Dies ist allerdings nur der Fall wenn die Arbeiten an Werkstücken durchgeführt werden welche, zwecks Einführen zwischen dem feststehenden und dem beweglichen Teil des Werkzeugkopfes, den selben Durchmesser oder den selben Querschnitt aufweisen, welcher wenig kleiner als die Werkzeugöffnung, bzw. als der Lauf des beweglichen Werkzeugteiles ist. Im Falle von Werkstücken mit kleinerem Querschnitt hingegen ergibt sich der Nachteil, dass der Lauf des beweglichen Teiles ein Vielfaches des Ausmaßes des Querschnittes des zu bearbeitenden Werkstückes ist und somit die Leerlaufzeit welche verfließt bis der bewegliche Teil von der maximalen Öffnungsstellung mit dem, am feststehenden Teil anliegenden, Werkstück in Berührung kommt, beachtlich ist. Weiters bewirken der Motor welcher die Ölpumpe betreibt und die Kraft welche zu überwinden ist um während der Schließbewegung die Rückholfeder aufzuladen, einen Verbrauch von Elektroenergie welche meist von einem aufladbaren Akku geliefert wird, was dazu führt dass der Akku öfters aufgeladen werden muss. Aus der US6792789B ist ein Gerät bekannt, an welchem ein Schneidkopf angebracht ist.

Aus der DE 10 2008 024018 A1 ist ein Verfahren zum Betreiben eines motorisch betätigbaren Handverpressgerätes bekannt, dieses Verfahren bezieht sich ausschließlich auf die Betätigung von Pressbacken während des Verpressens, z.B. von Kabelschuhen oder von Steckkontakten an Kabelenden. Zwecks Optimierung der Öffnungs- und Schließzeiten der Pressbacken ist eine Erhebung und Auswertung des Motorstroms welcher, während des Pressvorganges, vom Elektromotor der Ölpumpe aufgenommen wird und/oder die Erfassung des Druckanstieges im hydraulischen Antriebskreislauf nach der erfolgten Werkstücksberührung durch die Pressbacken bis zur vollständigen Verpressung, vorgeschlagen.
Dieses Verfahren sieht nicht vor, dass im Falle eines Austauschs des Presskopfs durch einen Schneidkopf, der plötzliche Druckabfall im hydraulischen Antriebskreislauf und/oder der plötzlich Abfall der Stromaufnahme seitens des Elektromotors der Ölpumpe als Signal für den abgeschlossenen Schneidvorgang erkannt und für die Optimierung der Arbeitszeiten genutzt wird.

Die Erfindung stellt sich die Aufgabe ein Verfahren für die Steuerung der Öffnungsbewegung eines am Antriebsgerät fest oder austauschbar angebrachten Schneidkopfes zu schaffen um eine Optimierung der Arbeitszeiten und eine Reduzierung des Verbrauchs an Elektroenergie zu erreichen.

Die Aufgabe wird durch das Verfahren gemäß Anspruch 1 gelöst. Zur Lösung dieser Aufgabe schlägt die Erfindung vor, am Gerät den Verlauf der Energieaufnahme, während der Ausführung der Bearbeitung, zu erheben, wobei der typische Verlauf des Schneidvorganges erkannt wird um, im Falle eines Schneidvorganges, infolge des durchgeführten Schnittes, das Rückflussventil zu betätigen und damit zu verhindern, dass für den Schnittvorgang nicht erforderliche Druckwerte erreicht werden und um den Öffnungslauf der Abmessung des Querschnittes der zu schneidenden Objekte anpassen zu können. Durch Einstellung der Rückflusszeit des Öls durch das genannte Rückflussventil ist es möglich eine Begrenzung der Zeit und des Öffnungslaufes, in Abhängigkeit der Abmessung des Querschnittes des zu bearbeitenden Objektes, zu erreichen und damit für den folgenden Schnitt, welcher an einem Objekt mit ähnlichem Querschnitt durchzuführen ist, den Lauf und die Schließzeit zu optimieren.

Durch Vermeidung des übertriebenen Drucks und durch die Anpassung des Arbeits- und des Öffnungslaufes an die effektiven Anforderungen werden die Arbeitszeiten verkürzt und Energie eingespart.

Die Erhebung des Verlaufes der Energieaufnahme während der Durchführung des Schnittes erfolgt erfindungsgemäß vorteilhaft mittels Drucksonde welche in der Zuleitung des Hydraulikzylinders oder im Zylinder selbst vorgesehen ist; es wird jedoch nicht eine Erhebung über eine Sonde welche die Stromaufnahme seitens des Motors für die Hydraulikpumpe erkennt oder über eine am Schneidkopf vorgesehene Kraftzelle zwecks Erkennung der Veränderungen der Schneidkraft welche vom Hydraulikzylinder erzeugt wird, ausgeschlossen.

Während der Durchführung des Schnittes zeigt die Sonde für die Erhebung des Öldrucks, sobald der bewegliche Teil des Werkzeuges mit dem zu schneidenden Objekt in Berührung kommt, einen Druckanstieg an welcher wesentlich konstant verläuft und an einem Druck-Zeit Diagramm durch eine ansteigende Gerade darstellbar ist, natürlich ist der Druckanstieg auch von der geometrischen Form des Querschnittes und vom Werkstoff des zu schneidenden Objektes abhängig.

Durch das progressive Eindringen der Schneide in das zu schneidende Objekt erfolgt eine progressive Druckverminderung bis zu einem Minimum im Moment des erfolgten Schnittes; am Druck-Zeit Diagramm entspricht diese Phase einer abfallenden Linie deren Verlauf von der Querschnittsform und vom Werkstoff des zu schneidenden Objektes abhängt.

Der besagte Druckverlauf wird durch einen Mikrocontroller als typisch für einen Schneidvorgang erkannt, dieser Verlauf ist eindeutig vom Druckverlauf im Falle einer Bearbeitung durch Druckverformung mittels spezifischem Presskopf, unterscheidbar. Bei einer Druckverformung nimmt der Druck konstant zu um anschließend auf einem relativ hohen konstantem Wert, eventuell über eine vorbestimmte Zeit, beibehalten zu werden, ohne dass sich dabei ein eindeutiger Druckabfall ergibt; erst infolge Betätigung des Rückflussventils ergibt sich ein Druckabfall auf den Wert 0. Aus Sicherheitsgründen und um Funktionsstörungen auszuschließen wird der Druckverlauf als typisch für einen Schneidvorgang erkannt wenn ein bestimmter Wert als Schwellendruck erreicht wird, wobei dieser Wert auch noch weiter ansteigen kann, auf welchen ein Druckabfall auf einen bestimmten Wert welcher eindeutig niedriger ist folgt und der den unteren Schwellenwert darstellt, welcher aber weiter abfallen kann. Auf diese Weise erfolgt der Erhebungs- und Steuerungsvorgang ausschließlich wenn ein Objekt zwischen den Schneiden des Werkzeugkopfes präsent ist, wodurch Unfälle und Störfälle vermieden werden.

Um den Öffnungslauf des Schneidkopfes zu begrenzen, sieht die Erfindung eine Einstellung der Öffnungszeit des Rückflussventils vor. Die Zeit um eine gewünschte Öffnung, etwas weiter als das Ausmaß des Querschnittes des zu schneidenden Objektes, zu erreichen, wird entweder anhand einer empirischen Tabelle oder durch Anpassung an die Öffnungszeit bei Ausführung der vorangegangenen Schnitte, bestimmt.

Im Falle von Erhebungen mittels Kraftzelle oder Sonde welche den Verlauf der Stromaufnahme seitens des Motors erfasst ist das Verfahren und der Funktionsablauf der selbe weil diese Sonden, während der Ausführung des Schnittes, Werte liefern welche wesentlich jenen des Druckverlaufes entsprechen.

Die Erfindung wird anschließend anhand eines in der beigelegten Zeichnung schematisch dargestellten Ausführungsbeispiels eines vorzuziehenden Antriebsgeräts und eines Druck-Zeit Diagramms welches den Druckverlauf während der Durchführung eines Schnittes mittels diesem Gerät darstellt, näher erklärt.

Die Fig. 1 zeigt ein Funktionsschema betreffend die Steuerung eines Antriebsgeräts welches mit einem Schneidkopf versehen ist.

Die Fig. 2 zeigt ein Druck-Zeit Diagramm welches der Ausführung eines Schnittes entspricht, der strichlierte Teil der Linie im selben Diagramm stellt den weiteren Druckverlauf an ohne Schneiderkennung Geräten dar.

Der Motor M betreibt die Pumpe 5 welche aus dem Tank S Öl ansaugt und in den Zylinder 2c mit Kolben 2 drückt B, dieser wirkt 2a auf den Schneidkopf 1 des Gerätes und bewirkt das Schließen 1a der Klingen, das Aufladen einer Rückstellfeder und das progressive Durchschneiden des dazwischengelegten Objektes. Der Druckverlauf im Inneren des Zylinders mit Kolben 2 wird mittels Drucksonde 3 erhoben welche mit einer Steuerzentale Z elektrisch verbunden 3a ist und ihrerseits mit dem Motor M elektrisch verbunden 1m ist und über ein einstellbares Zeitrelais T mit dem Rückflussventil 4 verbunden 4a ist.

Sobald durch die Pumpe 5 das Öl aus dem Tank S angesaugt A wird und in den Zylinder 2c gedrückt B wird um den Kolben 2a auszufahren 2a und mindestens eine Klinge des Schneidkopfes 1 zu betätigen 1a, wobei diese Klinge am zu schneidenden Objekt anliegt, erfolgt ein progressiver Anstieg des Druckes P bis der noch nicht durchdrungene verbleibende Querschnitt des Objektes abnimmt und in einem ersten Moment einen weniger starken Anstieg des Druckes bewirkt um anschließend eine progressive Abnahme des Druckes auf einen Mindestwert D zu erreichen sobald das Objekt durchschnitten ist. Der abnehmende Druck erreicht nicht den Wert 0 weil dem Druck der Rückholfeder entgegengewirkt wird.

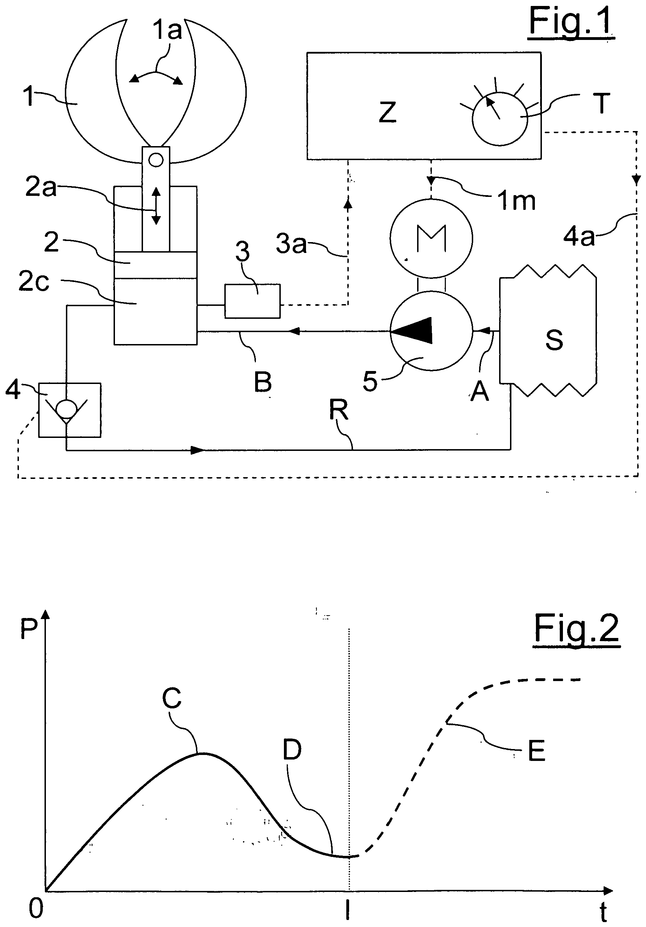

In bekannten Schneidwerkzeugen erfolgt, nach durchgeführtem Schnitt, entweder durch die gegenseitige Berührung der Klingen oder durch Auffahren einer Klinge an einen Endanschlag, ein anschließender Druckanstieg E (Fig. 2 strichlierte Linie) bis ein automatisches Rückflussventil und/oder ein Zeitrelais aktiv wird; natürlich ist in diesem Fall die gesamte Energie welche nach dem erfolgten Schnitt D aufgenommen wird alles verschwendete Energie, damit wird die Ladung des Akkus herabgesetzt und die Leerlaufzeiten erhöhen sich, sei es betreffend den durchgeführten Schnitt als auch betreffend den nächsten Schnitt weil die Klingen des Schneidkopfes sich in maximaler Öffnungsposition befinden und somit mehr Zeit benötigen und Energie aufnehmen. Diese Nachteile werden bedeutend reduziert indem ein einstellbares Zeitrelais T vorgesehen wird welches mit dem Rückflussventil 4 verbunden R ist. Aufgrund von Tabellen oder durch Wahrnehmen der notwendigen Öffnungszeiten der Klingen um eine Position einzunehmen welche knapp weiter ist als das größte Ausmaß des Querschnittes des gerade durchschnittenen Objektes, ist es möglich die Öffnungsdauer des Rückflussventils 4 so einzustellen dass, für die Durchführung der folgenden Schnitte an Objekten mit gleichem Querschnitt, die Öffnung des Werkzeuges weniger weiter erfolgt als es das Ausmaß des Querschnittes verlangt und dass somit die Leerlaufzeiten und die Energieverschwendung minimiert werden.

Natürlich kann die Sonde 3 für die Erhebung des Druckverlaufs durch eine Sonde für die Stromaufnahme des Motors M, bzw. durch eine Kraftzelle welche an einer der Klingen, am Hydraulikkolben oder am Lager der Klingen angebracht ist, ersetzt werden. Über die besagten bekannten Erhebungsvorrichtungen kann immer der Verlauf der erhobenen Werte während des Schneidvorgangs und die Erkennung dass es sich um einen Schneidvorgang handelt erfolgen und somit wird eine Einstellung der Dauer des Öffnungslaufes am Schneidkopf sowie die Optimierung der Arbeitszeiten und die Reduzierung der Energieaufnahme möglich. Die Erkennung des Schneidvorganges in der Steuerzentrale Z erfolgt durch Erheben des Überschreitens eines oberen Schwellendruckes, eines folgenden Druckabfalls und eines unteren Schwellendrucks welcher eindeutig unter dem ersten Schwellendruck liegt.

## Patentansprüche

1. Verfahren für die Steuerung des Öffnungslaufs eines Gerätes an welchem ein Schneidkopf (1), fest oder austauschbar angebracht ist dessen Arbeitslauf hydraulisch über einen Kolben (2) betrieben wird welcher sich in einem Zylinder (2c) bewegt in welchen eine elektrisch betriebene Pumpe (5) aus einem Tank (S) angesaugtes Öl drückt, wobei nach Ausführung des Schnittes, der Rücklauf (1a) des Schneidkopfes (1) von einem Rückflussventil (4) gesteuert und von einer, während des Arbeitslaufes aufgeladenen, Rückholfeder angetrieben wird, wobei während des Arbeitslaufes der Druckverlauf, die am Arbeitskopf wirkende Kraft oder die Stromaufnahme des Elektromotors von einer Drucksonde, bzw. von einer Kraftzelle, bzw. von einer Sonde für Energieaufnahme, erhoben und an eine Steuerzentrale (Z) geleitet wird und wobei das Rückflussventil (4) für den Abfluss des Öls aus dem Zylinder (2c) in den Tank (S) durch ein einstellbares mit der Steuerzentrale (Z) verbundenes Zeitrelais (T) gesteuert wird, wobei die Schneidbearbeitung als solche von einer Steuerzentrale (Z), aufgrund des Druckverlaufes oder des Verlaufes der am Schneidkopf durch den Kolben (2) wirkenden Kraft oder durch den Verlauf der Stromaufnahme seitens des Elektromotors (M) während der Durchführung der Bearbeitung und aufgrund Erhebung der Erreichung eines oberen Schwellenwertes während der Phase der steigenden Stromaufnahme, zwecks Ausführung der Bearbeitung und Erhebung der Erreichung eines unteren Schwellenwertes während der Phase der sinkenden Stromaufnahme, erfolgt.

2. Verfahren gemäß Ansprüche 1, **dadurch gekennzeichnet, dass** infolge der Erkennung der Schneidbearbeitung, die Steuerzentrale (Z) den Konsens für die Öffnung des Rückflussventils (4) gibt welcher den Rückfluss (R) des Öls in den Tank (S) und den Öffnungslauf des Schneidkopfes bestimmt.

3. Verfahren gemäß der Ansprüche von 1 bis 2, **dadurch gekennzeichnet, dass** die Öffnungszeit des Rückflussventils (4) und somit die Dauer des Öffnungslaufs mittels einstellbarem Zeitrelais (T) verändert werden kann und dass diese veränderbare Zeit die Anpassung der Öffnungsweite an den Ausmaßen des Querschnittes des zu schneidenden Objekts ermöglicht.

## Claims

1. A method for controlling the opening movement of a device on which a cutting head (1) is fitted in a fixed or replaceable manner, the working movement of which is operated hydraulically via a piston (2) which moves in a cylinder (2c), into which an electrically operated pump (5) pushes oil that has been sucked in from a tank (S), wherein, after the cut has been made, the return movement (1a) of the cutting head (1) is controlled by a backflow valve (4) and is driven by a return spring which is loaded during the working movement, wherein, during the working movement, the pressure curve, the force acting on the working head or the power consumption of the electric motor is ascertained respectively by a pressure sensor, by a force cell or by a power consumption sensor and is passed to a central control unit (Z), and wherein the backflow valve (4) for draining the oil from the cylinder (2c) into the tank (S) is controlled by an adjustable time relay (T) which is connected to the central control unit (Z), wherein the cutting machining as such is effected by a central control unit (Z) based on the pressure curve or the curve of the force acting on the cutting head by the piston (2) or the curve of the power consumption of the electric motor (M) while the machining is being carried out and based on the ascertainment of the reaching of an upper threshold value during the phase of increasing power consumption, for the purpose of carrying out the machining, and the ascertainment of the reaching of a lower threshold value during the phase of decreasing power consumption.

2. The method according to claim 1, **characterized in that**, by detecting the cutting machining, the central control unit (Z) gives consent for the opening of the backflow valve (4), which defines the backflow (R) of the oil into the tank (S) and the opening movement of the cutting head.

3. The method according to claims 1 to 2, **characterized in that** the open time of the backflow valve (4) and thus the duration of the opening movement can be varied by means of the adjustable time relay (T), and **in that** this variable time makes it possible to adapt the opening width to the dimensions of the cross-section of the object to be cut.

## Revendications

1. Procédé, destiné à commander la course d'ouverture d'un appareil sur lequel une tête de coupe (1) est montée de manière fixe ou interchangeable, dont le cycle de travail est actionné par voie hydraulique par l'intermédiaire d'un piston (2), lequel se déplace dans un cylindre (2c) dans lequel une pompe (5) à fonctionnement électrique presse de l'huile aspiré à partir d'un réservoir (S), après la réalisation de la coupe, le retour arrière (1a) de la tête de coupe (1) étant commandé par une soupape anti-reflux (4) et étant entraîné par un ressort de rappel chargé pendant le cycle de travail, pendant le cycle de travail, la courbe de pression, la force agissant sur la tête de travail ou la puissance absorbée du moteur électrique étant relevée par une sonde de pression ou par un capteur de force et dirigée vers une centrale de commande (Z) et pour l'écoulement de l'huile hors du cylindre (2c) dans le réservoir (S), la soupape anti-reflux (4) étant commandée par un relais temporisé (T) réglable, connecté sur la centrale de commande (Z), l'usinage en coupe s'effectuant en tant que tel sur la base de la courbe de pression ou de la courbe de la force agissant sur la tête de coupe par l'intermédiaire du piston (2) ou par la courbe de la puissance absorbée par le moteur électrique (M) pendant la réalisation de l'usinage et du fait du relevé de l'atteinte d'une valeur seuil supérieure pendant la phase de la puissance absorbée croissante aux fins de la réalisation de l'usinage et du relevé de l'atteinte d'une valeur seuil inférieure pendant la phase de la puissance absorbée décroissante.

2. Procédé selon la revendication 1, **caractérisé en ce que** suite à l'identification de l'usinage en coupe, la centrale de commande (Z) donne le consensus pour l'ouverture de la soupape anti-reflux (4), lequel détermine le reflux (R) de l'huile dans le réservoir (S) et la courbe d'ouverture de la tête de coupe.

3. Procédé selon les revendications 1 ou 2, **caractérisé en ce que** le temps d'ouverture de la soupape anti-reflux (4) et ainsi la durée de la courbe d'ouverture est susceptible d'être modifié à l'aide d'un relais temporisé (T) réglable et **en ce que** ledit temps modifiable permet d'adapter la largeur d'ouverture aux dimensions de la section transversale de l'objet qu'il s'agit de couper.
